# FASCICULE DE BREVET EUROPEEN

(11) **EP 3 543 199 B1**
(45) Date de publication et mention de la délivrance du brevet: **15.07.2020**
(21) Numéro de dépôt: 19161793.5
(22) Date de dépôt: 11.03.2019
(51) Int. Cl.: B66F 7/28, B66F 7/06, B66F 7/08, B25H 1/00, B62H 3/04

(54) **TABLE ELEVATRICE POUR LA REPARATION ET L'ENTRETIEN D'ENGIN ROULANT, NOTAMMENT A DEUX ROUES**
HEBEBÜHNE FÜR DIE REPARATUR UND WARTUNG VON FAHRBAREN MASCHINEN, INSBESONDERE MIT ZWEI RÄDERN
LIFTING TABLE FOR REPAIR AND MAINTENANCE OF WHEELED VEHICLES, ESPECIALLY TWO-WHEELED

(30) Priorité: 22.03.2018 FR 1852457
(43) Date de publication de la demande: 25.09.2019
(73) Titulaire: Marolotest, 49300 Cholet (FR)
(72) Inventeur: GIRARD, Raphaël, 49230 SAINT GERMAIN SUR MOINE (FR)
(74) Mandataire: Godineau, Valérie

(56) Documents cités:
- WO-A1-2017/207882
- CN-U- 206 529 245
- DE-U1-202016 106 145
- FR-A- 1 109 257
- US-A- 6 120 876

## Description

### DOMAINE DE L'INVENTION

L'invention concerne une table élévatrice pour la réparation et l'entretien d'engin roulant, notamment à deux roues.

Elle concerne plus particulièrement une table élévatrice comprenant un plateau de table en matériau électriquement isolant avec deux bords opposés dits transversaux, et deux bords opposés dits longitudinaux, et un dispositif d'entraînement en déplacement en monte et baisse dudit plateau de table entre une position abaissée dans laquelle l'engin peut prendre place sur ledit plateau de table par une extrémité du plateau formant l'un des bords transversaux dudit plateau de table, et une position élevée dans laquelle l'opérateur peut effectuer des opérations d'entretien ou de maintenance sur l'engin.

### ART ANTÉRIEUR

La conception d'une table élévatrice du type précité est connue comme l'illustre le document WO2017207882. D'autres types de tables élévatrices sont connus comme l'illustrent les documents CN 206529245, FR-1.109.257 ou DE 202016106145.

Le développement des deux-roues de forte puissance ou hybrides entraîne la présence, sur de tels deux-roues, d'un moteur électrique ayant une tension importante.

Un tel deux-roues est généralement maintenu sur la table d'entretien élévatrice sur laquelle il est placé à l'aide d'une béquille en métal ou d'un étau de roue qui peut être métallique. Par ailleurs, le technicien, qui intervient sur un tel deux-roues, a tendance à s'appuyer avec son corps contre le plateau de la table élévatrice ou à poser ses outils sur ledit plateau de table. En outre, l'engin peut être ruisselant (pluie, neige, eau de lavage...) ou présenter une fuite de liquide de refroidissement ou de carburant. Il existe donc un risque de blessure du technicien par choc électrique, en cas de court-circuit ou de contact intempestif de fils électriques ou autre problème électrique sur l'engin roulant, le plateau étant rendu conducteur par la présence de liquide.

### BUT ET RÉSUMÉ

Un but de l'invention est donc de proposer une table élévatrice dont la conception permet de limiter les risques de choc électrique du technicien intervenant sur un engin roulant électrique placé sur la table élévatrice.

À cet effet, l'invention a pour objet une table élévatrice pour la réparation et l'entretien d'engin roulant, notamment d'engin roulant à deux roues, ladite table comprenant un plateau de table avec deux bords opposés dits transversaux, et deux bords opposés dits longitudinaux et un dispositif d'entraînement en déplacement en monte et baisse dudit plateau de table entre une position abaissée dans laquelle l'engin peut prendre place sur ledit plateau de table par une extrémité du plateau formant l'un des bords transversaux dudit plateau de table et une position élevée dans laquelle l'opérateur peut effectuer des opérations d'entretien ou de maintenance sur l'engin, ledit plateau de table étant en un matériau électriquement isolant, caractérisée en ce que le plateau de table est muni, côté face du dessus de réception de l'engin, au niveau de ses bords longitudinaux d'un rebord et en ce que le plateau de table présente au moins une partie de sa face du dessus de réception de l'engin inclinée en direction d'au moins une zone ménagée à la surface du plateau de table et apte à former une zone de collecte de fluide.

La présence des rebords au niveau des bords longitudinaux de délimitation du périmètre extérieur du plateau de table permet d'empêcher un ruissellement de fluide vers l'opérateur positionné autour du plateau de table. La réalisation d'un plateau à face du dessus en pente sur au moins une partie de sa surface permet de canaliser le fluide présent sur le plateau de table vers une zone de collecte choisie éloignée de l'opérateur. Cette zone de collecte est ainsi apte à permettre le recueil d'au moins une partie du fluide de ruissellement provenant de l'engin et se déplaçant par gravité à la surface dudit plateau de table.

Selon un mode de réalisation de l'invention, la ou au moins l'une des zones de collecte est disposée entre les bords transversaux et longitudinaux du plateau de table à écartement desdits bords.

Selon un mode de réalisation, la ou au moins l'une des parties de la face du dessus de réception de l'engin du plateau de table inclinée en direction d'au moins une zone de collecte est conformée pour former au moins une rampe inclinée à pente descendante depuis l'un des bords longitudinaux ou transversaux du plateau de table en direction de la zone de collecte.

Selon un mode de réalisation de l'invention, la ou au moins l'une des parties de la face du dessus de réception de l'engin du plateau de table inclinée en direction d'au moins une zone de collecte est conformée sous forme de rampes inclinées à pente descendante convergeant en direction de la ou de l'une des zones de collecte.

Selon un mode de réalisation, la ou au moins l'une des zones de collecte est équipée d'un conducteur électrique de mise à la terre apte à permettre la mise à la terre de ladite zone de collecte. Il en résulte une sécurité supplémentaire en termes de réduction du risque de choc électrique.

Selon un mode de réalisation, le conducteur électrique de mise à la terre est fixé au plateau de table à l'aide d'un ensemble boulon/écrou, le boulon traversant ledit plateau de table et assurant en coopération avec l'écrou un pincement du plateau de table. Un tel montage par pincement du plateau de table permet d'accentuer l'angle d'inclinaison de la pente de la partie inclinée de la face du dessus du plateau de table

Selon un mode de réalisation, le plateau de table est muni, côté face du dessus de réception de l'engin, d'au moins une, de préférence au moins deux plaques de renfort dudit plateau de table, la ou chaque plaque de renfort étant réalisée en un matériau électriquement isolant et montée amovible sur ledit plateau de table, chaque plaque de renfort étant interchangeable avec une autre plaque de renfort lorsque le nombre de plaques de renfort du plateau de table est au moins égal à deux.

Selon un mode de réalisation, le plateau de table présente, côté face du dessus de réception de l'engin, au moins un logement formé par un évidement ménagé dans ledit plateau de table et la ou chaque plaque de renfort s'insère dans un logement dudit plateau de table.

Selon un mode de réalisation, le matériau électriquement isolant constitutif du plateau de table est choisi dans le groupe des matières de synthèse formées par les polyoléfines, les polyamides, les polymères vinyliques, et les polyesters.

Selon un mode de réalisation, le plateau de table est surmonté d'un étau de roue comprenant deux mors en regard entre lesquels l'une des roues de l'engin est apte à être enserrée à l'état disposé de l'engin sur le plateau de table, au moins la surface de l'étau de roue étant en matériau électriquement isolant.

Selon un mode de réalisation, le dispositif d'entraînement en déplacement en monte et baisse dudit plateau de table comprend des moyens d'élévation du plateau de table associés à au moins un actionneur. De préférence, l'actionneur est un actionneur pneumatique. La présence d'un actionneur pneumatique en remplacement d'un système électrique ou électrohydraulique classique limite à nouveau les risques de choc électrique.

Selon un mode de réalisation, les moyens d'élévation comprennent au moins une paire de bras reliés entre eux par une liaison pivot, les bras de chaque paire de bras s'étendant chacun entre la face du dessous du plateau et une embase positionnée à l'aplomb du plateau de table, et l'actionneur pneumatique est un coussin d'air s'étendant à l'état gonflé de part et d'autre, c'est-à-dire à la fois au-dessus et au-dessous, de la liaison pivot des bras de la ou des paires de bras.

### BRÈVE DESCRIPTION DES DESSINS

L'invention sera bien comprise à la lecture de la description suivante d'exemples de réalisation, en référence aux dessins annexés dans lesquels :

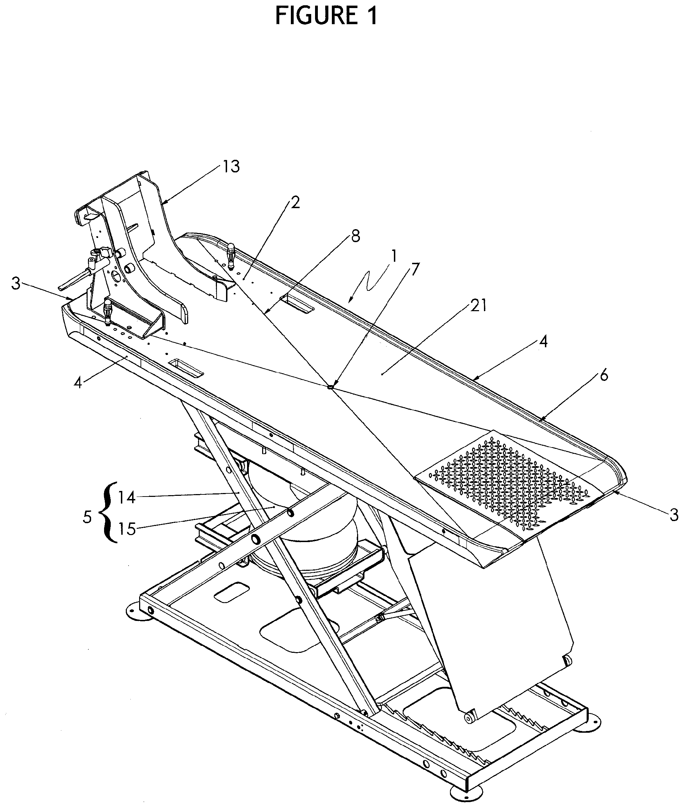

- La figure 1 représente une vue d'ensemble d'une table élévatrice conforme à l'invention, en configuration d'utilisation, à l'état dépourvu d'un engin roulant.

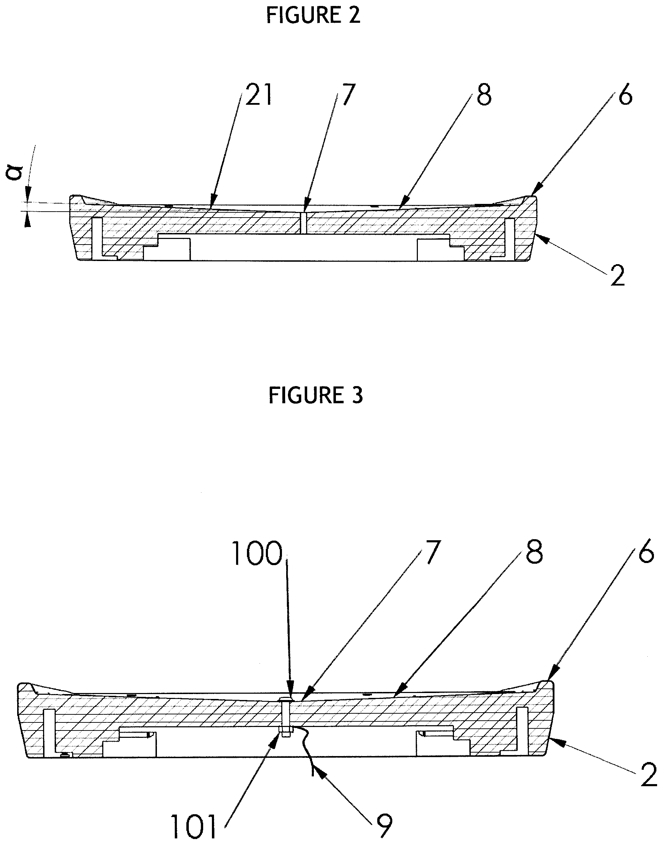

- La figure 2 représente une vue transversale en coupe du plateau de table d'une table élévatrice conforme à l'invention,
- La figure 3 représente une vue transversale en coupe du plateau de table d'une table élévatrice conforme à l'invention illustrant la mise à la terre de la zone de collecte de fluide du plateau de table et,

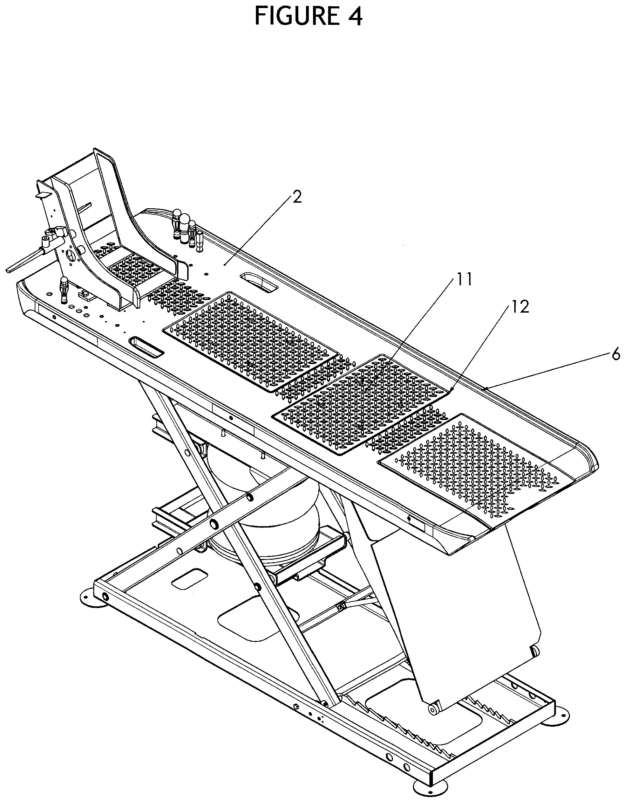

- La figure 4 représente une vue en perspective d'une table élévatrice conforme à l'invention.

### DESCRIPTION DÉTAILLÉE

Comme mentionné ci-dessus, la table 1 objet de l'invention est plus particulièrement destinée à la réparation et l'entretien d'engin roulant à deux roues, à savoir, notamment les motos électriques ou hybrides.

De manière en soi connue, cette table 1 comprend un plateau 2 de table. Ce plateau 2 de table présente deux bords opposés transversaux 3 et deux bords opposés longitudinaux 4 servant à la délimitation du périmètre extérieur du plateau 2 de table. Au moins l'un des bords transversaux 3 du plateau 2 de table forme le bord par lequel l'engin peut accéder au plateau 2 de table. L'axe longitudinal du plateau 2 de table est donc pris dans le sens du déplacement de l'engin à la surface dudit plateau, ce qui correspond dans l'exemple représenté à la plus grande longueur du plateau de table. En effet, ce plateau 2 de table est un plateau quadrangulaire réalisé rectangulaire dans l'exemple représenté. Ce plateau 2 de table peut être réalisé en un ou plusieurs éléments à contact jointif ou écartés les uns des autres. L'invention couvre indifféremment un plateau 2 de table réalisé en un seul élément ou en un assemblage de plusieurs éléments pour délimiter l'aire du plateau. Dans l'exemple représenté, le plateau 2 de table est réalisé en un seul élément.

Ce plateau 2 de table est réalisé en un matériau électriquement isolant. Par matériau électriquement isolant, on entend un matériau non conducteur de l'électricité et qui peut comprendre une ou plusieurs matières non-conductrices de l'électricité. Généralement, la ou les matières non-conductrices de l'électricité constitutives du matériau électriquement isolant sont une ou des matières de synthèse choisies dans le groupe formé par les polyoléfines, les polyamides, les polymères vinyliques, et les polyesters. Ainsi, ces matières peuvent être du polyéthylène haute ou moyenne densité, du polyfluorure de vinylidène, du polypropylène homopolymère, de l'acrylonitrile butadiène styrène, du polychlorure de vinyle, du polyamide, du polytéréphtalate de butylène, ou du polytéréphtalate d'éthylène. Dans l'exemple représenté, le plateau 2 de la table élévatrice est en polyéthylène haute densité

Ce plateau 2 de table peut être, comme dans l'exemple représenté, surmonté d'un étau 13 de roue comprenant deux mors en regard, entre lesquels l'une des roues de l'engin est apte à être insérée à l'état disposé de l'engin sur le plateau 2 de table. Généralement, c'est la roue avant de l'engin qui est enserrée entre les mors de l'étau 13. Dans l'exemple représenté, le plateau 2 de table et au moins la surface de l'étau 13 de roue sont en matériau électriquement isolant. L'utilisation de matières de synthèse du type précité pour les mors de l'étau confère en outre à ces derniers une certaine élasticité permettant de maintenir la roue de l'engin entre les mors de l'étau par simple serrage élastique, simplifiant ainsi la conception de la table élévatrice.

Dans l'exemple représenté, le plateau 2 de table est une pièce moulée fabriquée par roto-moulage. Il en est de même pour chaque mors.

Comme mentionné ci-dessus, la table 1 est une table élévatrice et comprend, à cet effet, un dispositif 5 d'entraînement en déplacement en monte et baisse du plateau 2 de table. Ce dispositif 5 d'entraînement en déplacement en monte et baisse du plateau 2 de table comprend des moyens 14 d'élévation du plateau 2 de table, associés à au moins un actionneur 15.

Dans l'exemple représenté, les moyens 14 d'élévation comprennent deux paires de bras. Ces paires de bras sont disposées en regard l'une de l'autre de manière parallèle. Chaque paire de bras comprend deux bras reliés entre eux par une liaison pivot. Les bras de chaque paire de bras dits en ciseau s'étendent chacun entre la face du dessous du plateau 2 de table et une embase positionnée à l'aplomb du plateau 2 de table. Cette embase se présente ici sous forme d'un simple cadre horizontal quadrangulaire.

Pour chaque paire de bras, l'un des bras de la paire de bras est couplé à l'embase à pivotement, tandis que l'autre bras est couplé à l'embase à pivotement coulissant.

De même, pour chaque paire de bras, l'un des bras est couplé au plateau de table à pivotement, tandis que l'autre bras est couplé au plateau de table à pivotement coulissant.

A chaque fois, le pivotement s'opère autour d'un axe parallèle à l'axe de la liaison pivot entre les bras d'une paire de bras.

Pour permettre l'ouverture et la fermeture des ciseaux formés par chaque paire de bras, la table 1 élévatrice comprend un actionneur 15 pneumatique formé ici par un coussin d'air s'étendant à l'état gonflé de part et d'autre, c'est-à-dire à la fois au-dessus et au-dessous de la liaison pivot des bras de chaque paire de bras.

Ce coussin d'air est pris en sandwich entre deux supports, tels que platine ou cadre, s'étendant l'un, au-dessus de la liaison pivot, l'autre, au-dessous de la liaison pivot, en configuration d'utilisation de la table élévatrice.

Dans l'exemple représenté, ces supports sont formés par des platines. Chaque platine est, au niveau de chaque paire de bras, couplée à l'un des bras de la paire de bras par une liaison pivot d'axe parallèle à la liaison pivot des bras de la paire entre eux, et à l'autre bras de la paire de bras, par une liaison pivot d'axe parallèle à la liaison pivot des bras de la paire de bras entre eux, la partie de cette liaison pivot couplant la platine au bras de la paire de bras étant montée à coulissement le long d'un bord dit longitudinal de la platine.

Grâce à ce montage, le gonflage et le dégonflage du coussin d'air entraînent respectivement la montée et la descente du plateau 2 de table. Ainsi, le plateau 2 de table est monté mobile entre une position abaissée dans laquelle l'engin peut prendre place sur ledit plateau 2 de table par une extrémité du plateau formant l'un des bords transversaux 3 dudit plateau de table et une position élevée dans laquelle l'opérateur peut effectuer des opérations d'entretien ou de maintenance sur l'engin.

Il doit être noté que l'actionneur qui est ici un actionneur pneumatique aurait pu, de manière équivalente, être remplacé par un actionneur électrique ou électrohydraulique.

De manière caractéristique à l'invention, le plateau 2 de table est muni, côté face 21 du dessus de réception de l'engin, au niveau de chacun de ses bords longitudinaux 4 d'un rebord 6 qui empêche un ruissellement de fluide depuis la surface du plateau de table vers l'extérieur du plateau de table au niveau de ses bords longitudinaux 4. Le plateau 2 de table présente encore au moins une partie de sa face 21 du dessus de réception de l'engin inclinée en direction d'au moins une zone 7 appelée zone 7 de collecte de fluide et ménagée à la surface du plateau 2 de table.

Le plateau 2 de table peut comporter une ou plusieurs zones 7 de collecte de fluide, ce fluide correspondant généralement soit à des eaux de ruissellement de l'engin préalablement exposé à la pluie, ou à une eau de lavage ou autre, soit à un liquide fuyant de l'engin, tel que de l'eau de refroidissement, du carburant, de l'huile ou autre. Dans l'exemple représenté, le plateau 2 de table ne comporte qu'une seule zone 7 de collecte disposée entre les bords transversaux et longitudinaux du plateau de table à écartement desdits bords. Dans l'exemple représenté, cette zone 7 de collecte est réalisée sensiblement centrale, c'est-à-dire sensiblement au centre du plateau 2 de table. Il doit être noté que cette zone 7 de collecte n'est pas vidangeable dans l'exemple représenté. Cette zone de collecte aurait pu toutefois en variante être équipée de moyens de vidange, tels qu'un drain. Le fluide disposé à la surface du plateau de table peut parvenir par gravité dans la zone 7 de collecte grâce à la ou les parties en pente dudit plateau 2 de table. En effet, la ou au moins l'une des parties de la face 21 du dessus de réception de l'engin du plateau 2 de table inclinée en direction d'au moins une zone de collecte est conformée pour former une rampe 8 inclinée d'un angle α à pente descendante depuis l'un des bords longitudinaux ou transversaux du plateau en direction de la zone de collecte. Dans l'exemple représenté, la face 21 du dessus de réception de l'engin du plateau 2 de table est conformée sous forme de quatre rampes 8 inclinées à pente descendante convergeant en direction de la zone 7 de collecte. La face du dessus du plateau 2 de table présente ainsi un motif en creux dit en pointe de diamant.

Pour renforcer la sécurité de la table 1 élévatrice, la zone 7 de collecte est équipée d'un conducteur 9 électrique de mise à la terre apte à permettre la mise à la terre de ladite zone 7 de collecte. Dans l'exemple représenté, le conducteur 9 électrique de mise à la terre qui est formé par un simple fil électrique est fixé au plateau 2 à l'aide de moyens de fixation traversant le plateau 2 de table. Ces moyens de fixation sont formés ici par un ensemble boulon/écrou, avec le boulon 100 traversant ledit plateau 2 de table et assurant, en coopération avec l'écrou 101, un pincement du plateau de table. Ce pincement permet d'accentuer la pente des parties inclinées du plateau de table qui est un plateau creux donc aisément déformable. Le conducteur 9 électrique de mise à la terre peut être raccordé à la terre de l'installation électrique du bâtiment à l'intérieur duquel est disposée la table 1 élévatrice. Il est également possible de simplement raccorder l'extrémité libre du conducteur 9 électrique à un piquet enfoncé dans le sol. La terre s'entend ici comme la masse conductrice de la terre dont le potentiel électrique en chaque point est considéré comme égal à zéro.

Enfin, pour parfaire l'ensemble, le plateau 2 de table présente, côté face du dessus 21 de réception de l'engin, au moins un logement 12, en l'occurrence dans l'exemple représenté, deux logements 12 formés chacun par un évidement ménagé dans la face 21 du dessus du plateau 2 de table.

Dans l'exemple représenté, chaque logement 12 sert à la réception d'une plaque 11 de renfort du plateau 2 de table. Chaque plaque 11 de renfort est réalisée en un matériau électriquement isolant de dureté supérieure à la dureté du matériau constitutif du plateau. L'une des plaques de renfort peut être disposée, au niveau du plateau 2 de table, dans la zone d'appui au sol de la béquille de l'engin. Chaque plaque de renfort est montée amovible sur ledit plateau de table et est interchangeable avec une autre plaque de renfort de sorte que lorsque l'une des plaques de renfort du plateau de table est usée, elle peut être remplacée par une autre plaque de renfort du plateau sans perte de temps importante pour l'opérateur.

L'utilisation d'une table telle que décrite ci-dessus s'opère comme suit : le plateau de table étant en position basse, l'engin roulant est amené sur la table, et sa roue avant est insérée entre les mors de l'étau, qui assurent un maintien par serrage élastique de ladite roue avant.

Le plateau de table est, par gonflage du coussin d'air raccordé à une source d'air sous pression, élevé jusqu'à la hauteur souhaitée. L'opérateur intervient sur l'engin puis procède à l'abaissement du plateau de table par dégonflage du coussin et enlèvement de l'engin du plateau de table par roulement sur ledit plateau de table. Si, au cours de l'intervention de l'opérateur, des fluides s'écoulent depuis l'engin en direction de la surface du plateau, ils peuvent se déplacer par gravité à la surface du plateau et s'accumuler dans la zone de collecte de fluides. La présence des rebords au niveau du plateau de table limite le risque de contact de l'opérateur avec ces fluides.

## Revendications

1. Table (1) élévatrice pour la réparation et l'entretien d'engin roulant, notamment d'engin roulant à deux roues, ladite table (1) comprenant un plateau (2) de table avec deux bords opposés dits transversaux (3), et deux bords opposés dits longitudinaux (4) et un dispositif (5) d'entraînement en déplacement en monte et baisse dudit plateau (2) de table entre une position abaissée dans laquelle l'engin peut prendre place sur ledit plateau (2) de table par une extrémité du plateau formant l'un des bords transversaux (3) dudit plateau (2) de table et une position élevée dans laquelle l'opérateur peut effectuer des opérations d'entretien ou de maintenance sur l'engin, ledit plateau (2) de table étant en un matériau électriquement isolant,
**caractérisée en ce que** le plateau (2) de table est muni, côté face (21) du dessus de réception de l'engin, au niveau de ses bords longitudinaux (4) d'un rebord (6) et **en ce que** le plateau (2) de table présente au moins une partie de sa face (21) du dessus de réception de l'engin inclinée en direction d'au moins une zone (7) ménagée à la surface du plateau (2) de table et apte à former une zone (7) de collecte de fluide.

2. Table (1) élévatrice selon la revendication 1,
**caractérisée en ce que** la ou au moins l'une des zones (7) de collecte est disposée entre les bords transversaux (3) et longitudinaux (4) du plateau (2) de table à écartement desdits bords (3, 4).

3. Table (1) élévatrice selon l'une des revendications précédentes,
**caractérisée en ce que** la ou au moins l'une des parties de la face (21) du dessus de réception de l'engin du plateau (2) de table inclinée en direction d'au moins une zone (7) de collecte est conformée pour former au moins une rampe (8) inclinée à pente descendante depuis l'un des bords longitudinaux (4) ou transversaux (3) du plateau (2) de table en direction de la zone (7) de collecte.

4. Table (1) élévatrice selon l'une des revendications précédentes,
**caractérisée en ce que** la ou au moins l'une des parties de la face du dessus de réception de l'engin du plateau (2) de table inclinée en direction d'au moins une zone (7) de collecte est conformée sous forme de rampes (8) inclinées à pente descendante convergeant en direction de la ou de l'une des zones (7) de collecte.

5. Table (1) élévatrice selon l'une des revendications précédentes,
**caractérisée en ce que** la ou au moins l'une des zones (7) de collecte est équipée d'un conducteur (9) électrique de mise à la terre apte à permettre la mise à la terre de ladite zone (7) de collecte.

6. Table (1) élévatrice selon la revendication précédente,
**caractérisée en ce que** le conducteur (9) électrique de mise à la terre est fixé au plateau (2) de table à l'aide d'un ensemble boulon (100)/écrou (101), le boulon (100) traversant ledit plateau (2) de table et assurant, en coopération avec l'écrou (101), un pincement du plateau (2) de table.

7. Table (1) élévatrice selon l'une des revendications précédentes,
**caractérisée en ce que** le plateau (2) de table est muni, côté face du dessus de réception de l'engin, d'au moins une, de préférence au moins deux plaques (11) de renfort dudit plateau (2) de table, la ou chaque plaque (11) de renfort étant réalisée en un matériau électriquement isolant et montée amovible sur ledit plateau (2) de table, chaque plaque (11) de renfort étant interchangeable avec une autre plaque (11) de renfort lorsque le nombre de plaques (11) de renfort du plateau (2) de table est au moins égal à deux.

8. Table (1) élévatrice selon la revendication précédente,
**caractérisée en ce que** le plateau (2) de table présente, côté face du dessus (21) de réception de l'engin, au moins un logement (12) formé par un évidement ménagé dans ledit plateau (2) de table et **en ce que** la ou chaque plaque (11) de renfort s'insère dans un logement (12) dudit plateau (2) de table.

9. Table (1) élévatrice selon l'une des revendications précédentes,
**caractérisée en ce que** le matériau électriquement isolant constitutif du plateau (2) de table est choisi dans le groupe des matières de synthèse formées par les polyoléfines, les polyamides, les polymères vinyliques, et les polyesters.

10. Table (1) élévatrice selon l'une des revendications précédentes,
**caractérisée en ce que** le plateau (2) de table est surmonté d'un étau (13) de roue comprenant deux mors en regard entre lesquels l'une des roues de l'engin est apte à être enserrée à l'état disposé de l'engin sur le plateau de table, au moins la surface de l'étau (13) de roue étant en matériau électriquement isolant.

11. Table (1) élévatrice selon l'une des revendications précédentes,
**caractérisée en ce que** le dispositif (5) d'entraînement en déplacement en monte et baisse dudit plateau (2) de table comprend des moyens (14) d'élévation du plateau (2) de table associés à au moins un actionneur (15).

## Patentansprüche

1. Hebebühne (1) für die Reparatur und Wartung von fahrbaren Maschinen, insbesondere von fahrbaren Maschinen mit zwei Rädern, wobei die Bühne (1) eine Bühnenplatte (2) mit zwei gegenüberliegenden, als quer gerichtet bezeichneten Rändern (3) und zwei gegenüberliegenden, als längs gerichtet bezeichneten (4) Rändern und eine Vorrichtung (5) zum Hebe- und Senkverschiebungsantrieb der Bühnenplatte (2) zwischen einer abgesenkten Position, in der die Maschine auf der Bühnenplatte (2) durch ein Ende der Platte, das einen der quer gerichteten Ränder (3) der Bühnenplatte (2) bildet, angeordnet sein kann, und einer gehobenen Position umfasst, in der der Bediener Wartungs- oder Unterhaltungsvorgänge durchführen kann, wobei die Bühnenplatte (2) aus einem elektrisch isolierenden Material ist,
**dadurch gekennzeichnet, dass** die Bühnenplatte (2) auf der Vorderseite (21) auf der Aufnahme der Maschine, auf der Ebene seiner längs gerichteten Ränder (4), mit einem Kante (6) ausgestattet ist, und dadurch, dass die Bühnenplatte (2) mindestens eine Teil ihrer Seite (21) auf der Aufnahme der Maschine geneigt in Richtung mindestens einer Zone (7) aufweist, die auf der Oberfläche der Bühnenplatte (2) ausgebildet und ausgelegt ist, um eine Sammelzone (7) von Fluid zu bilden.

2. Hebebühne (1) nach Anspruch 1,
**dadurch gekennzeichnet, dass** die oder mindestens eine der Sammelzonen (7) zwischen dem quer (3) und längs gerichteten Rand (4) der Bühnenplatte (2), beabstandet von den Rändern (3, 4), angeordnet ist.

3. Hebebühne (1) nach einem der vorhergehenden Ansprüche,
**dadurch gekennzeichnet, dass** der oder mindestens einer der Teile der Seite (21) auf der Aufnahme der Maschine der Bühnenplatte (2), geneigt in Richtung mindestens einer Sammelzone (7), ausgeformt ist, um mindestens eine Rampe (8) zu bilden, die mit abfallender Neigung von einem der längs (4) oder quer gerichteten Ränder (3) der Bühnenplatte (2) in Richtung der Sammelzone (7) geneigt ist.

4. Hebebühne (1) nach einem der vorhergehenden Ansprüche,
**dadurch gekennzeichnet, dass** der oder mindestens einer der Teile der Seite auf der Aufnahme der Maschine der Bühnenplatte (2), geneigt in Richtung mindestens einer Sammelzone (7), in Form von Rampen (8), geneigt mit abfallender Neigung, ausgeformt ist, die in Richtung der oder einer der Sammelzone(n) (7) zusammenlaufen.

5. Hebebühne (1) nach einem der vorhergehenden Ansprüche,
**dadurch gekennzeichnet, dass** die oder mindestens eine der Sammelzonen (7) mit einem elektrischen Leiter (9) zu Erdung ausgestattet ist, der ausgelegt ist, um die Erdung der Sammelzone (7) zu ermöglichen.

6. Hebebühne (1) nach dem vorhergehenden Anspruch,
**dadurch gekennzeichnet, dass** der elektrische Leiter (9) zur Erdung an der Bühnenplatte (2) mit Hilfe einer Bolzen (100)/Mutter (101)-Einheit fixiert ist, wobei der Bolzen (100) die Bühnenplatte (2) durchquert und in Zusammenarbeit mit der Mutter (101) ein Klemmen der Bühnenplatte (2) sicherstellt.

7. Hebebühne (1) nach einem der vorhergehenden Ansprüche,
**dadurch gekennzeichnet, dass** die Bühnenplatte (2) auf der Vorderseite auf der Aufnahme der Maschine mit mindestens einer, vorzugsweise mindestens zwei Verstärkungsplatten (11) der Bühnenplatte (2) ausgestattet ist, wobei die oder jede Verstärkungsplatte (11) aus einem elektrisch isolierenden Material hergestellt und entfernbar auf der Bühnenplatte (2) montiert ist, wobei jede Verstärkungsplatte (11) mit einer anderen Verstärkungsplatte (11) austauschbar ist, wenn die Anzahl der Verstärkungsplatten (11) der Bühnenplatte (2) mindestens gleich zwei ist.

8. Hebebühne (1) nach dem vorhergehenden Anspruch,
**dadurch gekennzeichnet, dass** die Bühnenplatte (2) auf der Vorderseite (21) auf der Aufnahme der Maschine, mindestens eine Lagerung (12) aufweist, die durch eine Aussparung gebildet ist, die in der Bühnenplatte (2) ausgebildet ist, und dadurch, dass jede Verstärkungsplatte (11) in eine Lagerung (12) der Bühnenplatte (2) eingeführt ist.

9. Hebebühne (1) nach einem der vorhergehenden Ansprüche,
**dadurch gekennzeichnet, dass** das elektrisch isolierende Material, aus dem die Bühnenplatte (2) besteht, ausgewählt ist aus der Gruppe der Synthesematerialien, gebildet aus Polyolefinen, Polyamiden, Vinylpolymeren und Polyestern.

10. Hebebühne (1) nach einem der vorhergehenden Ansprüche,
**dadurch gekennzeichnet, dass** die Bühnenplatte (2) von einem Radschraubstock (13) überragt ist, umfassend zwei gegenüberliegende Backen, zwischen denen eines der Räder der Maschine ausgelegt ist, um im angeordneten Zustand der Maschine auf der Bühnenplatte geklemmt zu sein, wobei mindestens die Oberfläche des Schraubstocks (13) aus einem elektrisch isolierenden Material ist.

11. Hebebühne (1) nach einem der vorhergehenden Ansprüche,
**dadurch gekennzeichnet, dass** die Vorrichtung (5) zum Hebe- und Senkverschiebungsantrieb der Bühnenplatte (2) Mittel (14) zum Heben der Bühnenplatte (2) umfasst, die mit mindestens einer Betätigungsvorrichtung (15) assoziiert sind.

## Claims

1. A lifting table (1) for repair and maintenance of a wheeled vehicle, in particular a wheeled vehicle with two wheels, said table (1) comprising a table top (2) with two so-called transverse opposite edges (3), and two so-called longitudinal opposite edges (4), and a device (5) for driving the upward and downward movement of said table top (2) between a lowered position in which the vehicle can be placed on said table top (2) by one end of the top forming one of the transverse edges (3) of said table top (2) and a so-called raised position in which the operator can perform upkeep or maintenance operations on the vehicle, said table top (2) being made from an electrically insulating material,
**characterized in that** the table top (2) is provided, on the upper face (21) for receiving the vehicle, at its longitudinal edges (4), with a rim (6) and **in that** the table top (2) has at least one portion of its upper face (21) for receiving the vehicle inclined toward at least one zone (7) arranged at the surface of the table top (2) and able to form a fluid collection zone (7).

2. The lifting table (1) according to claim 1,
**characterized in that** the or at least one of the collection zones (7) is arranged between the transverse (3) and longitudinal (4) edges of the table top (2) at a distance from said edges (3, 4).

3. The lifting table (1) according to one of the preceding claims,
**characterized in that** the or at least one of the parts of the upper face (21) for receiving the vehicle of the table top (2) inclined toward at least one collection zone (7) is configured to form at least one ramp (8) inclined with a downward slope from one of the longitudinal (4) or transverse (3) edges of the table top (2) toward the collection zone (7).

4. The lifting table (1) according to one of the preceding claims,
**characterized in that** the or at least one of the parts of the upper face for receiving the vehicle of the table top (2) inclined toward at least one collection zone (7) is configured in the form of ramps (8) inclined with a downward slope converging toward the or one of the collection zones (7).

5. The lifting table (1) according to one of the preceding claims,
**characterized in that** the or at least one of the collection zones (7) is equipped with a grounding electrical conductor (9) able to allow the grounding of said collection zone (7).

6. The lifting table (1) according to the preceding claim,
**characterized in that** the electrical grounding conductor (9) is attached to the table top (2) using a bolt (100)/nut (101) assembly, the bolt (100) passing through said table top (2) and ensuring, in cooperation with the nut (101), clamping of the table top (2).

7. The lifting table (1) according to one of the preceding claims,
**characterized in that** the table top (2) is provided, on the upper face for receiving the vehicle, with at least one, preferably at least two plates (11) for reinforcing said table top (2), the or each reinforcing plate (11) being made from an electrically insulating material and mounted removably on said table top (2), each reinforcing plate (11) being interchangeable with another reinforcing plate (11) when the number of enforcing plates (11) of the table top (2) is at least equal to two.

8. The lifting table (1) according to the preceding claim,
**characterized in that** the table top (2) has, on the upper face (21) for receiving the vehicle, at least one housing (12) formed by a recess arranged in said table top (2) and **in that** the or each reinforcing plate (11) is inserted in a housing (12) of said table top (2).

9. The lifting table (1) according to one of the preceding claims,
**characterized in that** the electrically insulating material making up the table top (2) is selected from the group of synthetic materials made up of polyolefins, polyamides, vinyl polymers and polyesters.

10. The lifting table (1) according to one of the preceding claims,
**characterized in that** the table top (2) is topped by a wheel vise (13) comprising two jaws opposite one another between which one of the wheels of the vehicle can be gripped in the state of the vehicle arranged on the table top, at least the surface of the wheel vise (13) being made from an electrically insulating material.

11. The lifting table (1) according to one of the preceding claims,
**characterized in that** the device (5) for driving the upward and downward movement of said table top (2) comprises means (14) for raising the table top (2) associated with at least one actuator (15).
